# EUROPEAN PATENT APPLICATION

(11) **EP 3 648 513 A1**
(43) Date of publication of application: **06.05.2020**
(21) Application number: 17919662.1
(22) Date of filing: 31.07.2017
(51) Int. Cl.: H04W 48/12

(54) **COMMUNICATION METHOD AND APPARATUS**

(71) Applicant: Huawei Technologies Co., Ltd., Longgang District Shenzhen, Guangdong 518129 (CN)
(72) Inventor: REN, Zhanyang, Shenzhen Guangdong 518129 (CN); LI, Zhenyu, Shenzhen Guangdong 518129 (CN); ZHANG, Wurong, Shenzhen Guangdong 518129 (CN); HAN, Jinxia, Shenzhen Guangdong 518129 (CN)
(74) Representative: Grünecker Patent- und Rechtsanwälte PartG mbB
(86) International application number: PCT/CN2017/095116
(87) International publication number: WO 2019/023833

(57) **Abstract**

Embodiments of this application provide a communication method and a communications apparatus. The method includes: sending an ePDCCH to a terminal, where the ePDCCH channel carries scheduling information of a SIB; and sending a PDSCH to the terminal based on the scheduling information of the SIB, where the PDSCH carries the SIB. The scheduling information of the SIB is carried on the ePDCCH, but in the prior art, scheduling information of a SIB is carried on a PDCCH. An aggregation level of the ePDCCH may be higher than a maximum aggregation level of the PDCCH; and therefore, performance of demodulating the ePDCCH by the terminal is higher, and even when signal coverage quality is poor, the terminal can still correctly demodulate the ePDCCH, to obtain the accurate scheduling information of the SIB, and successfully implement access to a network device and subsequent data transmission between the terminal and the network device, thereby improving a communication success rate and communication efficiency.

## Description

### TECHNICAL FIELD

Embodiments of this application relate to the field of communications technologies, and in particular, to a communication method and a communications apparatus.

### BACKGROUND

In an MF (MulteFire) system, a terminal, such as user equipment (User Equipment, UE), receives a discovery signal (discovery signal, DRS) sent by a network device (such as a base station), to implement access to an MF cell. Usually, the base station sends a DRS to a plurality of UEs by using one subframe. The DRS includes a primary synchronization signal (primary synchronization signal, PSS), an MF-primary synchronization signal (MF-primary synchronization signal, MF-PSS), a secondary synchronization signal (secondary synchronization signal, SSS), an MF-secondary synchronization signal (MF-secondary synchronization signal, MF-SSS), and an MF-physical broadcast channel (physical broadcast channel, MF-PBCH). In addition, the base station further sends a physical downlink control channel (Physical Downlink Control Channel, PDCCH) and a physical downlink shared channel (Physical Downlink Shared Channel, PDSCH) to the UEs. The PDSCH carries a MulteFire system information block 1 (MulteFire system information block 1, SIB-MF1), and the PDCCH is used to indicate scheduling information of the PDSCH. The UEs receive the DRS, parse the PSS, the MF-PSS, the SSS, and the MF-SSS to obtain a physical cell identifier (physical cell ID, PCI), parse the MF-PBCH to obtain information such as system bandwidth, and implement clock and frequency synchronization with the base station. The UEs receive the PDCCH and the PDSCH to obtain the SIB-MF1. The SIB-MF1 mainly includes necessary system information, so that the UEs implement a connection to the base station and data transmission between the UEs and the base station.

When the MF system is deployed in a scenario such as a port, a dock, or an automated production flow, the UEs generally have relatively high mobility, and in a moving process of the UEs, a radio signal sent by the base station is easily blocked by various objects between the UEs and the base station; and consequently, relatively poor quality of the radio signal is caused, and the UEs may fail to normally receive the radio signal. In addition, a quantity of UEs is relatively large, and in the moving process, a case in which the UEs block the radio signal from each other easily occurs; and consequently, the UEs may also fail to normally receive data sent by the base station.

In the existing MF system, scheduling information of a SIB-MF1 is transmitted by using a PDCCH. Therefore, when UE is located in the foregoing cell coverage scenario with relatively poor signal quality, the PDCCH may not be demodulated correctly. Consequently, the SIB-MF1 cannot be obtained, and access to the base station and subsequent data transmission between the UE and the base station cannot be implemented.

### SUMMARY

Embodiments of this application provide a communication method and a communications apparatus, so that a terminal accurately obtains scheduling information of a SIB, thereby improving a communication success rate and communication efficiency.

According to a first aspect, an embodiment of this application provides a communication method, including:
sending an enhanced physical downlink control channel (Enhanced Physical Downlink Control Channel, ePDCCH) to a terminal, where the ePDCCH channel carries scheduling information of a SIB; and
sending a PDSCH to the terminal based on the scheduling information of the SIB, where the PDSCH carries the SIB.

In a possible design, a frequency domain resource occupied by the ePDCCH is a continuous frequency domain resource located at an edge of system bandwidth.

In a possible design, a time-frequency resource occupied by the ePDCCH is N physical resource block (physical resource block, PRB) pairs occupied by the ePDCCH, and N is an integer greater than or equal to 1.

In a possible design, a time-frequency resource occupied by the ePDCCH is the first to an N^{th} PRB pairs and/or an (M-N+1)^{th} to an M^{th} PRB pairs, and M is a total quantity of PRB pairs.

In a possible design, the method further includes:
sending resource indication information to the terminal, where the resource indication information is used to indicate the time-frequency resource occupied by the ePDCCH.

In a possible design, the sending resource indication information to the terminal includes:
sending a master information block (master information block, MIB) to the terminal, where the MIB includes the resource indication information.

In a possible design, the resource indication information occupies one idle bit or two idle bits in the MIB.

In a possible design, the method further includes:
sending transmission type indication information to the terminal, where the transmission type indication information is used to indicate a transmission type of the ePDCCH, and the transmission type of the ePDCCH is localized transmission or distributed transmission.

In a possible design, the transmission type indication information is included in the MIB, and the transmission type indication information occupies at least one idle bit in the MIB.

According to a second aspect, an embodiment of this application provides a communication method, including:
receiving an ePDCCH and a PDSCH that are sent by a network device, where the ePDCCH channel carries scheduling information of a SIB, and the PDSCH carries the SIB; and
demodulating the PDSCH based on the scheduling information of the SIB, to obtain the SIB.

In a possible design, a time-frequency resource occupied by the ePDCCH is a continuous frequency domain resource located at an edge of system bandwidth.

In a possible design, a time-frequency resource occupied by the ePDCCH is N PRB pairs occupied by the ePDCCH, and N is an integer greater than or equal to 1.

In a possible design, a time-frequency resource occupied by the ePDCCH is the first to an N^{th} PRB pairs and/or an (M-N+1)^{th} to an M^{th} PRB pairs, and M is a total quantity of PRB pairs.

In a possible design, the method further includes:
receiving resource indication information sent by the network device, where the resource indication information is used to indicate the time-frequency resource occupied by the ePDCCH; and
the receiving an ePDCCH sent by a network device includes: receiving, based on the time-frequency resource occupied by the ePDCCH, the ePDCCH sent by the network device.

In a possible design, the receiving resource indication information sent by the network device includes:
receiving a MIB sent by the network device, where the MIB includes the resource indication information.

In a possible design, the resource indication information occupies at least one idle bit in the MIB.

In a possible design, the method further includes:
receiving transmission type indication information sent by the network device, where the transmission type indication information is used to indicate a transmission type of the ePDCCH, and the transmission type of the ePDCCH is localized transmission or distributed transmission; and
the receiving an ePDCCH sent by a network device includes: receiving, based on the transmission type of the ePDCCH, the ePDCCH sent by the network device.

In a possible design, the transmission type indication information is included in the MIB, and the transmission type indication information occupies at least one idle bit in the MIB.

According to a third aspect, an embodiment of this application provides a communications apparatus, including:
a sending module, configured to send an ePDCCH to a terminal, where the ePDCCH channel carries scheduling information of a SIB; and send a PDSCH to the terminal based on the scheduling information of the SIB, where the PDSCH carries the SIB.

In a possible design, a frequency domain resource occupied by the ePDCCH is a continuous frequency domain resource located at an edge of system bandwidth.

In a possible design, a time-frequency resource occupied by the ePDCCH is N PRB pairs occupied by the ePDCCH, and N is an integer greater than or equal to 1.

In a possible design, a time-frequency resource occupied by the ePDCCH is the first to an N^{th} PRB pairs and/or an (M-N+1)^{th} to an M^{th} PRB pairs, and M is a total quantity of PRB pairs.

In a possible design, the sending module is further configured to send resource indication information to the terminal, where the resource indication information is used to indicate the time-frequency resource occupied by the ePDCCH.

In a possible design, the sending module is specifically configured to send a MIB to the terminal, where the MIB includes the resource indication information.

In a possible design, the resource indication information occupies at least one idle bit in the MIB.

In a possible design, the sending module is further configured to send transmission type indication information to the terminal, where the transmission type indication information is used to indicate a transmission type of the ePDCCH, and the transmission type of the ePDCCH is localized transmission or distributed transmission.

In a possible design, the transmission type indication information is included in the MIB, and the transmission type indication information occupies at least one idle bit in the MIB.

It should be noted that the communications apparatus in the third aspect may be a network device, or may be a chip inside a network device.

According to a fourth aspect, an embodiment of this application provides a communications apparatus, including:
a receiving module, configured to receive an ePDCCH and a PDSCH that are sent by a network device, where the ePDCCH channel carries scheduling information of a SIB, and the PDSCH carries the SIB; and
a processing module, configured to demodulate the PDSCH based on the scheduling information of the SIB, to obtain the SIB.

In a possible design, a time-frequency resource occupied by the ePDCCH is a continuous frequency domain resource located at an edge of system bandwidth.

In a possible design, a time-frequency resource occupied by the ePDCCH is N PRB pairs occupied by the ePDCCH, and N is an integer greater than or equal to 1.

In a possible design, a time-frequency resource occupied by the ePDCCH is the first to an N^{th} PRB pairs and/or an (M-N+1)^{th} to an M^{th} PRB pairs, and M is a total quantity of PRB pairs.

In a possible design, the receiving module is further configured to receive resource indication information sent by the network device, where the resource indication information is used to indicate the time-frequency resource occupied by the ePDCCH; and
that a receiving module is configured to receive an ePDCCH sent by a network device includes: the receiving module is configured to receive, based on the time-frequency resource occupied by the ePDCCH, the ePDCCH sent by the network device.

In a possible design, that the receiving module is configured to receive resource indication information sent by the network device includes: the receiving module is configured to receive a MIB sent by the network device, where the MIB includes the resource indication information.

In a possible design, the resource indication information occupies at least one idle bit in the MIB.

In a possible design, the receiving module is further configured to receive transmission type indication information sent by the network device, where the transmission type indication information is used to indicate a transmission type of the ePDCCH, and the transmission type of the ePDCCH is localized transmission or distributed transmission; and
that a receiving module is configured to receive an ePDCCH sent by a network device includes: the receiving module is configured to receive, based on the transmission type of the ePDCCH, the ePDCCH sent by the network device.

In a possible design, the transmission type indication information is included in the MIB, and the transmission type indication information occupies at least one idle bit in the MIB.

It should be noted that the communications apparatus in the fourth aspect may be a terminal, or may be a chip inside a terminal.

According to a fifth aspect, an embodiment of this application provides a network device, including: a transceiver. The transceiver is configured to perform the communication method according to any one of the embodiments of this application in the first aspect.

According to a sixth aspect, an embodiment of this application provides a terminal, including a processor and a transceiver. The processor and the transceiver are configured to perform the communication method according to any one of the embodiments of this application in the second aspect.

According to a seventh aspect, an embodiment of this application provides a computer-readable storage medium. When an instruction in the storage medium is executed by a processor of a communications apparatus, the communications apparatus is enabled to perform the communication method according to the embodiments of this application in the first aspect.

According to an eighth aspect, an embodiment of this application provides a computer-readable storage medium. When an instruction in the storage medium is executed by a processor of a communications apparatus, the communications apparatus is enabled to perform the communication method according to the embodiments of this application in the second aspect.

The embodiments of this application provide a communication method and a communications apparatus. The scheduling information of the SIB is carried on the ePDCCH, but in the prior art, scheduling information of a SIB is carried on a PDCCH. An aggregation level of the ePDCCH may be higher than a maximum aggregation level of the PDCCH; and therefore, performance of demodulating the ePDCCH by the terminal is higher, and even when signal coverage quality is poor, the terminal can still correctly demodulate the ePDCCH, to obtain the accurate scheduling information of the SIB, and successfully implement access to the network device and subsequent data transmission between the terminal and the network device, thereby improving a communication success rate and communication efficiency.

### BRIEF DESCRIPTION OF DRAWINGS

FIG. 1 is a schematic diagram of a communications system according to an embodiment of this application;
FIG. 2 is a flowchart of a communication method according to an embodiment of this application;
FIG. 3 is a flowchart of a communication method according to another embodiment of this application;
FIG. 4 is a schematic diagram of a relationship between a frequency domain resource occupied by an ePDCCH and a frequency domain resource occupied by a SIB according to an embodiment of this application;
FIG. 5 is a schematic structural diagram of a communications apparatus according to an embodiment of this application;
FIG. 6 is a schematic structural diagram of a network device according to an embodiment of this application;
FIG. 7 is a schematic structural diagram of a communications apparatus according to an embodiment of this application; and
FIG. 8 is a schematic structural diagram of a terminal according to an embodiment of this application.

### DESCRIPTION OF EMBODIMENTS

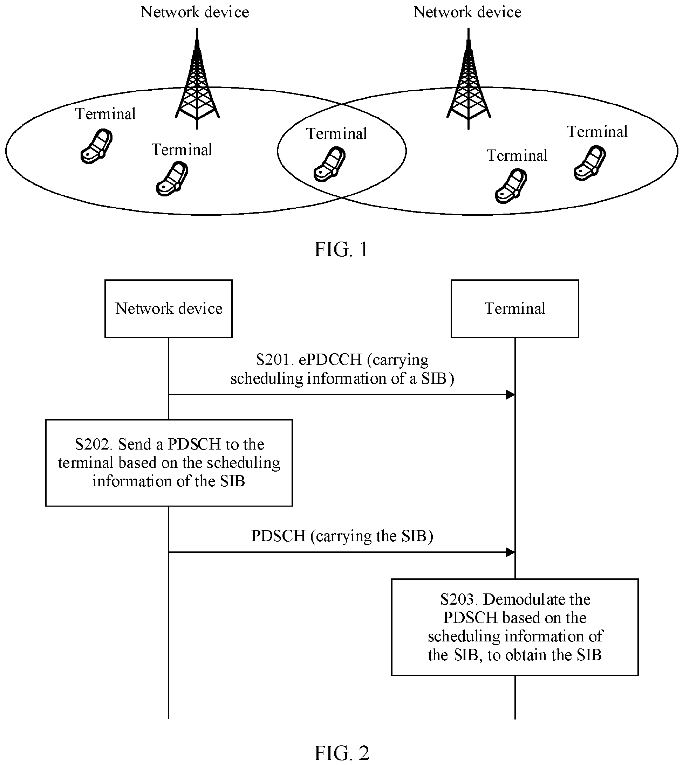

FIG. 1 is a schematic diagram of a communications system according to an embodiment of this application. As shown in FIG. 1, the communications system includes a network device and at least one terminal. The network device communicates with the at least one terminal by using a technical solution provided in each of the following embodiments of this application. The communications system in this embodiment may be applied to a 2G communications system, a 3G communications system, an LTE communications system, an MF (MulteFire) system, or a 5G communications system.

In the following, some terms in this application are described, to help persons skilled in the art have a better understanding.

A network device is also referred to as a radio access network (Radio Access Network, RAN) device, is a device that enables a terminal to access a wireless network, and may be an evolved NodeB (Evolutional Node B, eNB or eNodeB) in long term evolution (Long Term Evolution, LTE), a base station in the MF system, a relay station or an access point, or a base station in a 5G network, such as a transmission and reception point (Transmission and Reception Point, TRP) or a controller. This is not limited herein.

A terminal may be a wireless terminal or a wired terminal. The wireless terminal may refer to a device having a wireless transceiver function, and may be deployed on land, including indoors, outdoors, in a handheld manner, or in an in-vehicle manner; or may be deployed on a water surface (for example, on a steamboat); or may be deployed in the air (for example, on an airplane, a balloon, or a satellite). The terminal may be a mobile phone (mobile phone), a tablet (Pad), a computer with a wireless receiving and sending function, a virtual reality (Virtual Reality, VR) terminal, an augmented reality (Augmented Reality, AR) terminal, a wireless terminal in industrial control (industrial control), a wireless terminal in unmanned driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. This is not limited herein.

FIG. 2 is a flowchart of a communication method according to an embodiment of this application. As shown in FIG. 2, the method in this embodiment may be applied to an MF system, but not just the MF system. The method in this embodiment may include the following steps.

S201. A network device sends an ePDCCH to a terminal.

In this embodiment, the network device sends a SIB to the terminal. If this embodiment is applied to the MF system, the SIB is referred to as a SIB-MF1. The SIB-MF1 mainly includes necessary system information of the MF system, so that the terminal implements establishment of a connection to the network device, data transmission between the terminal and the network device, and the like.

To enable the terminal to receive the SIB, the terminal needs to first receive scheduling information of the SIB, and then accurately receive, based on the scheduling information of the SIB, the SIB sent by the network device. Therefore, a key is how to enable the terminal to accurately receive the scheduling information of the SIB. Based on this, in this embodiment, the scheduling information of the SIB sent by the network device to the terminal is carried on the ePDCCH, and the network device sends the ePDCCH that carries the SIB to the terminal. Correspondingly, the terminal receives the ePDCCH sent by the network device.

S202. The network device sends a PDSCH to the terminal based on the scheduling information of the SIB.

In this embodiment, a SIB is carried on the PDSCH, and the scheduling information of the SIB is information for scheduling the SIB. Therefore, to enable the scheduling information of the SIB carried on the ePDCCH to correspond to the SIB carried on the PDSCH, the network device in this embodiment sends the PDSCH that carries the SIB to the terminal based on the scheduling information of the SIB carried on the ePDCCH in S101. Correspondingly, the terminal receives the PDSCH that carries the SIB and that is sent by the network device.

S203. The terminal demodulates the PDSCH based on the scheduling information of the SIB, to obtain the SIB.

In this embodiment, after the terminal receives the ePDCCH and the PDSCH that are sent by the network device, it should be noted that a sequence in which the terminal receives the ePDCCH and the PDSCH is not limited in this embodiment. The terminal obtains, from the ePDCCH, the scheduling information of the SIB carried on the ePDCCH, and demodulates the received PDSCH based on the obtained scheduling information of the SIB, to obtain the SIB carried on the PDSCH. Then, for processing performed by the terminal based on the SIB, refer to a related description in the prior art. Details are not described herein again.

In this embodiment, the scheduling information of the SIB is carried on the ePDCCH, but in the prior art, scheduling information of a SIB is carried on a PDCCH. An aggregation level of the ePDCCH may be higher than a maximum aggregation level of the PDCCH; and therefore, performance of demodulating the ePDCCH by the terminal is higher, and even when signal coverage quality is poor, the terminal can still correctly demodulate the ePDCCH, to obtain the accurate scheduling information of the SIB, and successfully implement access to the network device and subsequent data transmission between the terminal and the network device, thereby improving a communication success rate and communication efficiency.

The terminal needs to correctly receive the ePDCCH to accurately obtain the scheduling information of the SIB. Therefore, before receiving the ePDCCH, the terminal needs to learn of a time-frequency resource occupied by the ePDCCH, and receive, based on the time-frequency resource occupied by the ePDCCH, the ePDCCH sent by the network device.

Optionally, in a possible implementation, the time-frequency resource occupied by the ePDCCH is preset, to be specific, each time the network device sends an ePDCCH, a time-frequency resource occupied by the ePDCCH does not change based on a network environment, and the network device and the terminal have already learned of, in advance, the time-frequency resource occupied by the ePDCCH. Therefore, before the network device sends an ePDCCH to the terminal, the network device does not need to notify the terminal of a time-frequency resource occupied by the ePDCCH, thereby reducing overheads of communication between the network device and the terminal.

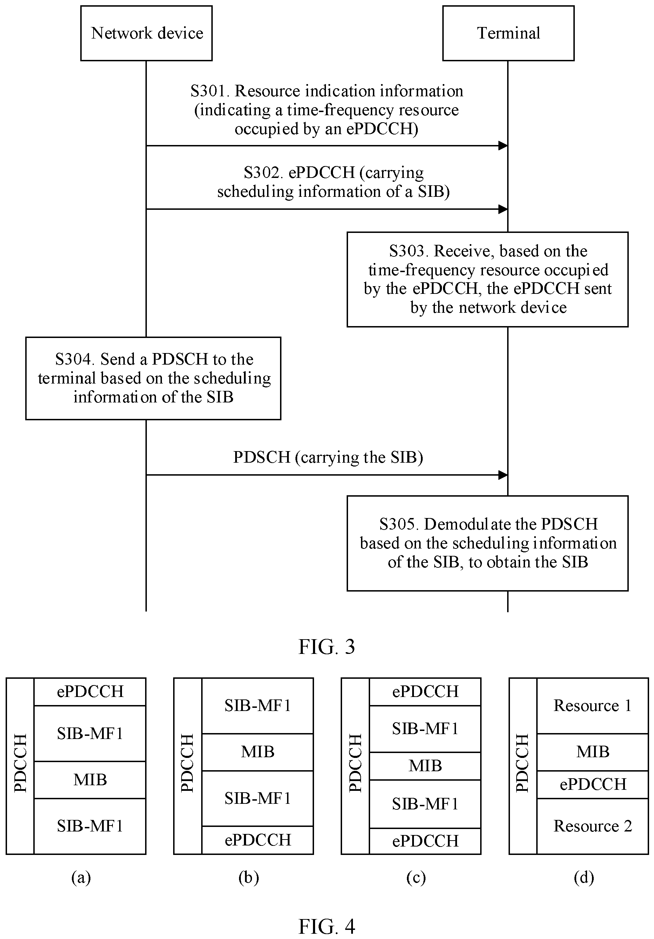

Optionally, in another possible implementation, the time-frequency resource occupied by the ePDCCH is not preset, and the network device needs to notify the terminal, so that the network device may flexibly adjust the time-frequency resource occupied by the ePDCCH. FIG. 3 is a flowchart of a communication method according to another embodiment of this application. The method in this embodiment may include the following steps.

S301. A network device sends resource indication information to a terminal.

In this embodiment, the network device notifies the terminal of a time-frequency resource occupied by an ePDCCH, so that the terminal correctly receives the ePDCCH based on the time-frequency resource occupied by the ePDCCH. The network device in this embodiment notifies, by using the resource indication information, the terminal of the time-frequency resource occupied by the ePDCCH. The resource indication information is used to indicate the time-frequency resource occupied by the ePDCCH.

Correspondingly, the terminal receives the resource indication information sent by the network device.

S302. The network device sends an ePDCCH to the terminal.

In this embodiment, the network device sends the ePDCCH to the terminal, and a time-frequency resource occupied by the ePDCCH sent in S302 is the same as the time-frequency resource indicated by the resource indication information.

A sequence in which S301 and S302 are performed is not limited in this embodiment.

S303. The terminal receives, based on the time-frequency resource occupied by the ePDCCH, the ePDCCH sent by the network device.

In this embodiment, after receiving the resource indication information, the terminal determines, based on the resource indication information, the time-frequency resource occupied by the ePDCCH, determines a location of the ePDCCH based on the time-frequency resource occupied by the ePDCCH, and accurately receives the ePDCCH sent by the network device.

S304. The network device sends a PDSCH to the terminal based on scheduling information of a SIB.

S305. The terminal demodulates the PDSCH based on the scheduling information of the SIB, to obtain the SIB.

In this embodiment, for a specific implementation process of S304 and S305, refer to a related description in the embodiment shown in FIG. 1. Details are not described again herein.

In this embodiment, the network device sends the resource indication information to the terminal to notify the terminal of the time-frequency resource occupied by the ePDCCH, so that the terminal receives the ePDCCH more accurately. In addition, the scheduling information of the SIB is carried on the ePDCCH, but in the prior art, scheduling information of a SIB is carried on a PDCCH. An aggregation level of the ePDCCH may be higher than a maximum aggregation level of the PDCCH; and therefore, performance of demodulating the ePDCCH by the terminal is higher, and even when signal coverage quality is poor, the terminal can still correctly demodulate the ePDCCH, to obtain the accurate scheduling information of the SIB, and successfully implement access to the network device and subsequent data transmission between the terminal and the network device, thereby improving a communication success rate and communication efficiency.

Based on the foregoing embodiments, optionally, the time-frequency resource occupied by the ePDCCH is N PRB pairs occupied by the ePDCCH, and N is an integer greater than or equal to 1. Optionally, N may be equal to 16. In this case, a maximum aggregation level of the ePDCCH is 64; and compared with a case in which the maximum aggregation level of the PDCCH is 8, performance of demodulating the ePDCCH by the terminal is better. It should be noted that, N may alternatively have another value, for example, 8.

Optionally, the frequency domain resource occupied by the ePDCCH is a continuous frequency domain resource located at an edge of system bandwidth. Because a frequency domain resource occupied on the PDSCH by a SIB is continuous, the frequency domain resource occupied by the ePDCCH is also preferably continuous and located only at the edge of the system bandwidth, thereby facilitating frequency domain resource allocation for the SIB. FIG. 4 is a schematic diagram of a relationship between a frequency domain resource occupied by an ePDCCH and a frequency domain resource occupied by a SIB according to an embodiment of this application. FIG. 4 is shown by using an example in which the SIB is a SIB-MF1.

As shown in (a) in FIG. 4, the frequency domain resource occupied by the ePDCCH is a continuous frequency domain resource located at an upper edge of system bandwidth. In this case, a remaining lower part of the system bandwidth may all be used for frequency domain resource allocation for the SIB, and a quantity of frequency domain resources that may be allocated to the SIB increases. As shown in (b) in FIG. 4, the frequency domain resource occupied by the ePDCCH is a continuous frequency domain resource located at a lower edge of the system bandwidth. In this case, a remaining upper part of the system bandwidth may all be used for the frequency domain resource allocation for the SIB, and the quantity of frequency domain resources that may be allocated to the SIB increases. As shown in (c) in FIG. 4, frequency domain resources occupied by the ePDCCH are the continuous frequency domain resource located at the upper edge of the system bandwidth and the continuous frequency domain resource located at the lower edge of the system bandwidth. In this case, a remaining middle part of the system bandwidth may all be used for the frequency domain resource allocation for the SIB, and relatively there are more frequency domain resources that may be allocated to the SIB. As shown in (d) in FIG. 4, the frequency domain resource occupied by the ePDCCH is a frequency domain resource located in a middle part of the system bandwidth, causing a remaining frequency domain resource of the system bandwidth to be discontinuous. In this case, a resource 1 or a resource 2 shown in the figure is discontinuous, and the resource 1 or the resource 2 may be used for the frequency domain resource allocation for the SIB, but the resource 1 and the resource 2 need not to be both used for the frequency domain resource allocation for the SIB. The quantity of frequency domain resources that may be allocated to the SIB relatively decreases, causing the frequency domain resource allocation for the SIB to be limited.

Optionally, the system bandwidth may be divided into M PRB pairs in frequency domain, to be specific, a total quantity of PRB pairs is M, and the PRB pairs are sequentially the first PRB pair, the second PRB pair, ..., and an M^{th} PRB pair. If the time-frequency resource occupied by the ePDCCH is N PRB pairs, the ePDCCH may occupy the first to an N^{th} PRB pairs; or the ePDCCH may occupy an (M-N+1)^{th} to the M^{th} PRB pairs; or the ePDCCH may occupy the first to an N^{th} PRB pairs and an (M-N+1)^{th} to the M^{th} PRB pairs. In this embodiment, the ePDCCH occupies the continuous frequency domain resource at the edge of the system bandwidth.

Optionally, in the foregoing embodiment, the resource indication information is carried in a MIB. A possible implementation of S301 is: sending, by the network device, a MIB to the terminal, where the MIB includes the resource indication information. Correspondingly, the terminal receives the MIB sent by the network device, and obtains the resource indication information based on the received MIB.

Optionally, the existing MIB has an idle bit. Therefore, the resource indication information may occupy the idle bit of the MIB, in other words, use the idle bit of the MIB to indicate the time-frequency resource occupied by the ePDCCH, thereby having relatively little impact on the MIB. The resource indication information in this embodiment may occupy at least one idle bit of the MIB. A MIB in an existing MF system has 10 idle bits, and the resource indication information in this embodiment may occupy, for example, one or two idle bits of the MIB.

Optionally, in an implementation, the time-frequency resource occupied by the ePDCCH is indicated by using one idle bit of the MIB, in other words, the resource indication information occupies one idle bit of the MIB.

The MIB in the MF system is used as an example, and for example, content of an MF-MIB is shown as follows:

```
          MasterInformationBlock-MF ::= SEQUENCE {
                 dl-Bandwidth-mf ENUMERATED {
                                                  n50, n100, spare1, spare2, spare3,
                                                  spare4, spare5,
                                    spare6
                 },
                 systemFrameNumber-mf BIT STRING (SIZE (8)),
               sf-Offset-mf INTEGER (0..4),
                 ePDCCH-SIB-MF1-mf BIT STRING (SIZE (1))
               spare BIT STRING (SIZE (9))
 }
```

In this embodiment, an ePDCCH-SIB-MF1-mf field is added to one idle bit of the MF-MIB. For example, an explanation of the ePDCCH-SIB-MF1-mf field is shown in Table 1. Table 1 shows that the ePDCCH occupies 16 PRB pairs. However, this embodiment is not limited to the explanation in Table 1.

**Table 1**

| ePDCCH-SIB-MF1-mf | PRB pair occupied by the ePDCCH | |
|---|---|---|
| | ePDCCH PRB pair set 1 | ePDCCH PRB pair set 2 |
| 0 | PRB pairs 0 to 7 | PRB pairs 8 to 15 |
| 1 | PRB pairs N-8 to N-1 | PRB pairs N-16 to N-9 |

As shown in Table 1, two resource sets may be configured for the ePDCCH: the ePDCCH PRB pair set 1 and the ePDCCH PRB pair set 2. Control information of a SIB may be carried on only one of the resource sets, or may be carried on the two resource sets. PRB pair resources of the two sets are located at the edge of the system bandwidth. N represents a total quantity of PRB pairs included in a system.

As shown in Table 1, when the ePDCCH-SIB-MF1-mf field is "0", it indicates that PRB pairs occupied by the ePDCCH are PRB pairs 0 to 15. PRB pairs included in the PRB pair set 1 are PRB pairs 0 to 7, and PRB pairs included in the PRB pair set 2 are PRB pairs 8 to 15. When the ePDCCH-SIB-MF1-mf field is "0", it indicates that PRB pairs occupied by the ePDCCH are PRB pairs 84 to 99, where PRB pairs included in the PRB pair set 1 are PRB pairs 92 to 99, and PRB pairs included in the PRB pair set 2 are PRB pairs 84 to 91 (where the system bandwidth N is 100 PRBs); or are PRB pairs 34 to 49, where PRB pairs included in the PRB pair set 1 are PRB pairs 42 to 49, and PRB pairs included in the PRB pair set 2 are PRB pairs 34 to 41 (where the system bandwidth N is 50 PRBs).

In the example shown in Table 1, only one bit of the MIB is required to indicate the time-frequency resource occupied by the ePDCCH, thereby reducing overheads.

Optionally, in an implementation, the time-frequency resource occupied by the ePDCCH is indicated by using two idle bits of the MIB, in other words, the resource indication information occupies two idle bits of the MIB.

The MIB in the MF system is used as an example, and for example, content of an MF-MIB is shown as follows:

```
          MasterInformationBlock-MF ::= SEQUENCE {
                 dl-Bandwidth-mf ENUMERATED {
                                                  n50, n100, spare1, spare2, spare3,
                                                  spare4, spare5,
          spare6
                                           },
                 systemFrameNumber-mf BIT STRING (SIZE (8)),
               sf-Offset-mf INTEGER (0..4),
                 ePDCCH-SIB-MF1-mf BIT STRING (SIZE (2))
               spare BIT STRING (SIZE (8))
 }
```

In this embodiment, an ePDCCH-SIB-MF1-mf field is added to two idle bits of the MF-MIB.

For example, an explanation of the ePDCCH-SIB-MF1-mf field is shown in Table 2. However, this embodiment is not limited to the explanation in Table 2.

**Table 2**

| The ePDCCH-SIB-MF1-mf field is explained as follows: | | |
|---|---|---|
| ePDCCH-SIB-MF1-mf | PRB pair occupied by the ePDCCH | |
| | ePDCCH PRB pair resource set 1 | ePDCCH PRB pair resource set 2 |
| 00 | PRB pairs 0 to 7 | Null |
| 01 | PRB pairs N-8 to N-1 | Null |
| 10 | PRB pairs 0 to 7 | PRB pairs 8 to 15 |
| 11 | PRB pairs N-8 to N-1 | PRB pairs N-16 to N-9 |

As shown in Table 2, one or two PRB pair resource sets may be configured for the ePDCCH. When the ePDCCH-SIB-MF1-mf field is "00", it indicates that the ePDCCH has only one PRB pair resource set, including eight PRB pairs, and PRB pairs occupied by the ePDCCH are PRB pairs 0 to 7. When the ePDCCH-SIB-MF1-mf field is "01", it also indicates that the ePDCCH has only one PRB pair resource set, including eight PRB pairs, and PRB pairs occupied by the ePDCCH are PRB pairs 92 to 99 (where the system bandwidth is 100 PRBs) or PRB pairs 42 to 49 (where the system bandwidth is 50 PRBs). When the ePDCCH-SIB-MF1-mf field is "10" or "11", it indicates that the ePDCCH includes two PRB pair resource sets, and occupies 16 PRB pairs that have a PRB pair resource configuration that is the same as that in Table 1. Details are not described again.

In the example shown in Table 2, a plurality of configurations of the time-frequency resource occupied by the ePDCCH are available for selection, thereby improving flexibility.

For example, an explanation of the ePDCCH-SIB-MF1-mf field is shown in Table 3. However, this embodiment is not limited to the explanation in Table 3.

**Table 3**

| ePDCCH-SIB-MF1-mf | PRB pair occupied by the ePDCCH | |
|---|---|---|
| | ePDCCH PRB pair resource set 1 | ePDCCH PRB pair resource set 2 |
| 00 | PRB pairs 0 to 7 | Null |
| 01 | PRB pairs N-8 to N-1 | Null |
| 10 | PRB pairs 0 to 7 | PRB pairs N-8 to N-1 |
| 11 | To be determined | |

As shown in Table 3, when the ePDCCH-SIB-MF1-mf field is "00", it indicates that the ePDCCH has only one PRB pair resource set, including eight PRB pairs, and PRB pairs occupied by the ePDCCH are PRB pairs 0 to 7. When the ePDCCH-SIB-MF1-mf field is "01", it indicates that the ePDCCH has only one PRB pair resource set, including 16 PRB pairs, and PRB pairs occupied by the ePDCCH are PRB pairs N-8 to N-1. When the ePDCCH-SIB-MF1-mf field is "10", it indicates that the ePDCCH has two PRB pair resource sets, each resource set includes eight PRB pairs, PRB pairs included in the resource set 1 are PRB pairs 0 to 7, and PRB pairs included in the resource set 2 are PRB pairs N-8 to N-1.

In the example shown in Table 3, the frequency domain resource occupied by the ePDCCH may include two edge locations of the system bandwidth.

Optionally, based on the foregoing embodiments, the terminal needs to determine a transmission type of the ePDCCH, and the transmission type is localized transmission or distributed transmission.

Optionally, in a possible implementation, the transmission type of the ePDCCH is preset, to be specific, each time the network device sends an ePDCCH, the transmission type of the ePDCCH does not change based on a network environment, and the network device and the terminal have already learned of, in advance, the transmission type of the ePDCCH. Therefore, before the network device sends an ePDCCH to the terminal, the network device does not need to notify the terminal of the transmission type of the ePDCCH, thereby reducing overheads of communication between the network device and the terminal. For example, a transmission type of an ePDCCH used for sending scheduling information of the SIB is preset to the distributed transmission.

Optionally, in another possible implementation, the transmission type of the ePDCCH is not preset, and the network device needs to notify the terminal, so that the network device may flexibly adjust the transmission type of the ePDCCH based on a channel quality status, and the like, thereby ensuring performance of demodulating the ePDCCH by the terminal. Therefore, the network device in this embodiment further sends transmission type indication information to the terminal. The transmission type indication information is used to indicate the transmission type of the ePDCCH. Correspondingly, the terminal receives the transmission type indication information sent by the network device, and determines the transmission type of the ePDCCH based on the transmission type indication information, and then the terminal receives, based on the transmission type of the ePDCCH, the ePDCCH sent by the network device.

Optionally, in the foregoing embodiment, the transmission type indication information is included in the MIB.

Optionally, the existing MIB has an idle bit. Therefore, the transmission type indication information may occupy the idle bit of the MIB, in other words, use the idle bit of the MIB to indicate the transmission type of the ePDCCH, thereby having relatively little impact on the MIB. The transmission type indication information in this embodiment may occupy at least one idle bit of the MIB. A MIB in the existing MF system has 10 idle bits, and the transmission type indication information in this embodiment may occupy, for example, one idle bit of the MIB.

Optionally, in an implementation, the transmission type of the ePDCCH is indicated by using one idle bit of the MIB, in other words, the transmission type indication information occupies one idle bit of the MIB.

For example, the following field may be added to content of the MIB:
ePDCCH-transmissionType-mf ENUMERATED (localized, distributed) where localized indicates that the transmission type of the ePDCCH is the localized transmission, and distributed indicates that the transmission type of the ePDCCH is the distributed transmission.

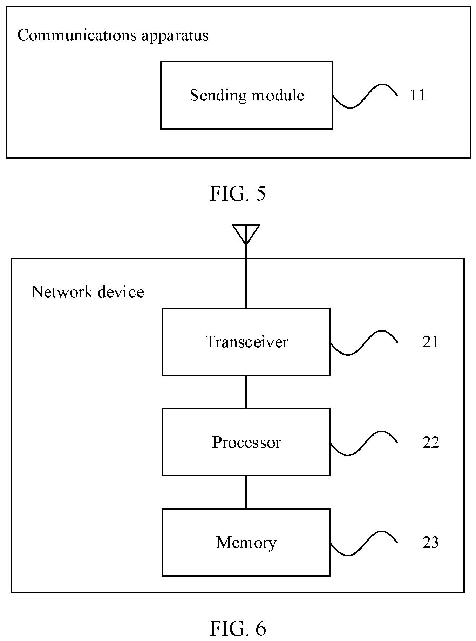

An embodiment of this application provides a communications apparatus. The communications apparatus may be a network device, or may be a chip inside a network device. FIG. 5 is a schematic structural diagram of a communications apparatus according to an embodiment of this application. The communications apparatus in this embodiment may include a sending module 11.

The sending module 11 is configured to: send an ePDCCH to a terminal, where the ePDCCH channel carries scheduling information of a SIB; and send a PDSCH to the terminal based on the scheduling information of the SIB, where the PDSCH carries the SIB.

Optionally, a frequency domain resource occupied by the ePDCCH is a continuous frequency domain resource located at an edge of system bandwidth.

Optionally, a time-frequency resource occupied by the ePDCCH is N PRB pairs occupied by the ePDCCH, and N is an integer greater than or equal to 1.

Optionally, a time-frequency resource occupied by the ePDCCH is the first to an N^{th} PRB pairs and/or an (M-N+1)^{th} to an M^{th} PRB pairs, and M is a total quantity of PRB pairs.

Optionally, the sending module 11 is further configured to send resource indication information to the terminal, where the resource indication information is used to indicate the time-frequency resource occupied by the ePDCCH.

Optionally, the sending module 11 is specifically configured to send a MIB to the terminal, where the MIB includes the resource indication information.

Optionally, the resource indication information occupies at least one idle bit in the MIB.

Optionally, the sending module 11 is further configured to send transmission type indication information to the terminal, where the transmission type indication information is used to indicate a transmission type of the ePDCCH, and the transmission type of the ePDCCH is localized transmission or distributed transmission.

Optionally, the transmission type indication information is included in the MIB, and the transmission type indication information occupies at least one idle bit in the MIB.

The communications apparatus described above in this embodiment may be configured to execute a technical solution executed by the network device or a chip inside the network device in the foregoing method embodiments. An implementation principle and a technical effect of this embodiment are similar to those of the foregoing method embodiments. For functions of the modules, refer to corresponding descriptions in the method embodiments, and details are not described herein.

FIG. 6 is a schematic structural diagram of a network device according to an embodiment of this application. As shown in FIG. 6, the network device in this embodiment may include a transceiver 21.

In hardware implementation, the sending module 11 may be the transceiver 21 in this embodiment. Alternatively, the transceiver 21 includes a transmitter and a receiver, and in this case, the sending module 11 may be the transmitter in the transceiver 21. The transceiver 21 may include a necessary radio frequency communications component, such as a frequency mixer.

Optionally, the network device in this embodiment may further include a processor 22. The processor 22 is in communication connection with the transceiver 21. The processor 22 may control the transceiver 21. The processor 22 may include at least one of a central processing unit (Central Processing Unit, CPU), a digital signal processor (digital signal processor, DSP), a microcontroller unit (Microcontroller Unit, MCU), an application-specific integrated circuit (Application Specific Integrated Circuit, ASIC), or a field programmable logic gate array (Field-Programmable Gate Array, FPGA).

Optionally, the network device in this embodiment may further include a memory 23. The memory 23 is configured to store a program instruction. The program instruction may be invoked to perform the foregoing solutions.

The program instruction may be implemented in a form of a software function unit and may be sold or used as an independent product. The memory 23 may be a computer-readable storage medium in any form. Based on such an understanding, all or some of the technical solutions of this application may be implemented in a form of a software product including several instructions, to enable a computer device that may be specifically the processor 22 to perform all or some of the steps of the network device in the embodiments of this application. The foregoing computer readable storage medium includes: any medium that can store program code, such as a USB flash drive, a removable hard disk, a read-only memory (Read-Only Memory, ROM), a random access memory (Random Access Memory, RAM), a magnetic disk, or an optical disc.

The network device described above in this embodiment may be configured to execute a technical solution of the network device or a chip inside the network device in the foregoing method embodiments of this application. An implementation principle and a technical effect of this embodiment are similar to those of the foregoing method embodiments. For functions of the modules, refer to corresponding descriptions in the method embodiments, and details are not described herein.

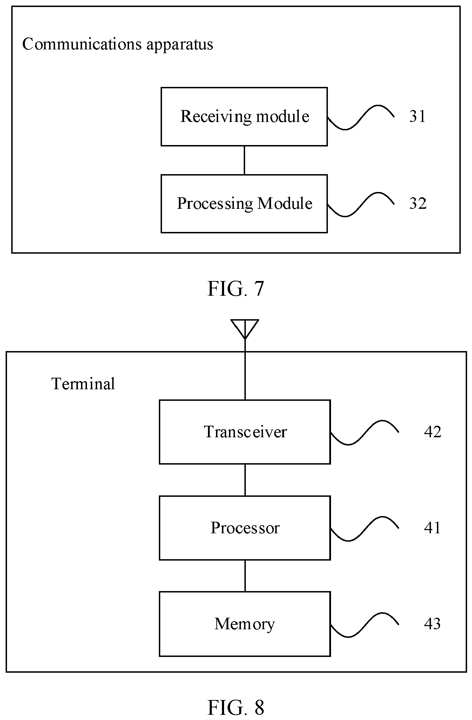

An embodiment of this application provides a communications apparatus. The communications apparatus may be a terminal or a chip inside a terminal. FIG. 7 is a schematic structural diagram of a communications apparatus according to an embodiment of this application. The communications apparatus in this embodiment may include: a receiving module 31 and a processing module 32.

The receiving module 31 is configured to receive an ePDCCH and a PDSCH that are sent by a network device, where the ePDCCH channel carries scheduling information of a SIB, and the PDSCH carries the SIB.

The processing module 32 is configured to demodulate the PDSCH based on the scheduling information of the SIB, to obtain the SIB.

Optionally, a time-frequency resource occupied by the ePDCCH is a continuous frequency domain resource located at an edge of system bandwidth.

Optionally, a time-frequency resource occupied by the ePDCCH is N PRB pairs occupied by the ePDCCH, and N is an integer greater than or equal to 1.

Optionally, a time-frequency resource occupied by the ePDCCH is the first to an N^{th} PRB pairs and/or an (M-N+1)^{th} to an M^{th} PRB pairs, and M is a total quantity of PRB pairs.

Optionally, the receiving module 31 is further configured to receive resource indication information sent by the network device, where the resource indication information is used to indicate the time-frequency resource occupied by the ePDCCH; and
that a receiving module 31 is configured to receive an ePDCCH sent by a network device includes: the receiving module 31 is configured to receive, based on the time-frequency resource occupied by the ePDCCH, the ePDCCH sent by the network device.

Optionally, that the receiving module 31 is configured to receive resource indication information sent by the network device includes: the receiving module 31 is configured to receive a MIB sent by the network device, where the MIB includes the resource indication information.

Optionally, the resource indication information occupies at least one idle bit in the MIB.

Optionally, the receiving module 31 is further configured to receive transmission type indication information sent by the network device, where the transmission type indication information is used to indicate a transmission type of the ePDCCH, and the transmission type of the ePDCCH is localized transmission or distributed transmission; and
that a receiving module 31 is configured to receive an ePDCCH sent by a network device includes: the receiving module 31 is configured to receive, based on the transmission type of the ePDCCH, the ePDCCH sent by the network device.

Optionally, the transmission type indication information is included in the MIB, and the transmission type indication information occupies at least one idle bit in the MIB.

The communications apparatus described above in this embodiment may be configured to execute a technical solution executed by the terminal or a chip inside the terminal in the foregoing method embodiments. An implementation principle and a technical effect of this embodiment are similar to those of the foregoing method embodiments. For functions of the modules, refer to corresponding descriptions in the method embodiments, and details are not described herein.

FIG. 8 is a schematic structural diagram of a terminal according to an embodiment of this application. As shown in FIG. 8, the terminal in this embodiment may include: a processor 41 and a transceiver 42. The processor 41 is in communication connection with the transceiver 42.

In hardware implementation, the receiving module 31 may be the transceiver 42 in this embodiment. Alternatively, the transceiver 42 includes a transmitter and a receiver, and in this case, the receiving module 31 may be the receiver in the transceiver 42. The processing module 32 may be built in or independent of the processor 41 of the terminal in a hardware form.

The transceiver 42 may include a necessary radio frequency communications component, such as a frequency mixer. The processor 41 may include at least one of a CPU, a DSP, an MCU, an ASIC, or an FPGA.

Optionally, the terminal in this embodiment may further include a memory 43. The memory 43 is configured to store a program instruction, and the processor 41 is configured to invoke the program instruction in the memory 43 to execute the foregoing solutions.

The program instruction may be implemented in a form of a software function unit and may be sold or used as an independent product. The memory 43 may be a computer-readable storage medium in any form. Based on such an understanding, all or some of the technical solutions of this application may be implemented in a form of a software product including several instructions, to enable a computer device that may be specifically the processor 41 to perform all or some of the steps of the terminal in the embodiments of this application. The foregoing computer readable storage medium includes: any medium that can store program code, such as a USB flash drive, a removable hard disk, a ROM, a RAM, a magnetic disk, or an optical disc.

The terminal described above in this embodiment may be configured to perform the technical solutions of the terminal in the foregoing method embodiments of this application, and an implementation principle and a technical effect of this embodiment are similar to those of the foregoing method embodiments. Details are not described herein again.

It should be noted that, in this embodiment of this application, module division is exemplary, and is merely a logical function division. In actual implementation, another division manner may be used. Functional modules in the embodiments of this application may be integrated into one processing module, or each of the modules may exist alone physically, or two or more modules are integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. A communication method, comprising:
sending an enhanced physical downlink control channel ePDCCH to a terminal, wherein the ePDCCH channel carries scheduling information of a system information block SIB; and
sending a physical downlink shared channel PDSCH to the terminal based on the scheduling information of the SIB, wherein the PDSCH carries the SIB.

2. The method according to claim 1, wherein a frequency domain resource occupied by the ePDCCH is a continuous frequency domain resource located at an edge of system bandwidth.

3. The method according to claim 1 or 2, wherein a time-frequency resource occupied by the ePDCCH is N physical resource block PRB pairs occupied by the ePDCCH, and N is an integer greater than or equal to 1.

4. The method according to any one of claims 1 to 3, wherein the time-frequency resource occupied by the ePDCCH is the first to an N^{th} PRB pairs and/or an (M-N+1)^{th} to an M^{th} PRB pairs, and M is a total quantity of PRB pairs.

5. The method according to any one of claims 1 to 4, further comprising:
sending resource indication information to the terminal, wherein the resource indication information is used to indicate the time-frequency resource occupied by the ePDCCH.

6. The method according to claim 5, wherein the sending resource indication information to the terminal comprises:
sending a master information block MIB to the terminal, wherein the MIB comprises the resource indication information.

7. The method according to claim 6, wherein the resource indication information occupies at least one idle bit in the MIB.

8. The method according to any one of claims 1 to 7, further comprising:
sending transmission type indication information to the terminal, wherein the transmission type indication information is used to indicate a transmission type of the ePDCCH, and the transmission type of the ePDCCH is localized transmission or distributed transmission.

9. The method according to claim 8, wherein the transmission type indication information is comprised in the MIB, and the transmission type indication information occupies at least one idle bit in the MIB.

10. A communication method, comprising:
receiving an enhanced physical downlink control channel ePDCCH and a physical downlink shared channel PDSCH that are sent by a network device, wherein the ePDCCH channel carries scheduling information of a system information block SIB, and the PDSCH carries the SIB; and
demodulating the PDSCH based on the scheduling information of the SIB, to obtain the SIB.

11. The method according to claim 10, wherein a time-frequency resource occupied by the ePDCCH is a continuous frequency domain resource located at an edge of system bandwidth; and/or
a time-frequency resource occupied by the ePDCCH is N physical resource block PRB pairs occupied by the ePDCCH, and N is an integer greater than or equal to 1; and/or
a time-frequency resource occupied by the ePDCCH is the first to an N^{th} PRB pairs and/or an (M-N+1)^{th} to an M^{th} PRB pairs, and M is a total quantity of PRB pairs.

12. The method according to claim 10 or 11, further comprising:
receiving resource indication information sent by the network device, wherein the resource indication information is used to indicate the time-frequency resource occupied by the ePDCCH; and
the receiving an ePDCCH sent by a network device comprises: receiving, based on the time-frequency resource occupied by the ePDCCH, the ePDCCH sent by the network device.

13. The method according to any one of claims 10 to 12, wherein the receiving resource indication information sent by the network device comprises:
receiving a master information block MIB sent by the network device, wherein the MIB comprises the resource indication information.

14. The method according to claim 13, wherein the resource indication information occupies one idle bit or two idle bits in the MIB.

15. The method according to any one of claims 10 to 14, further comprising:
receiving transmission type indication information sent by the network device, wherein the transmission type indication information is used to indicate a transmission type of the ePDCCH, and the transmission type of the ePDCCH is localized transmission or distributed transmission; and
the receiving an ePDCCH sent by a network device comprises: receiving, based on the transmission type of the ePDCCH, the ePDCCH sent by the network device.

16. A communications apparatus, comprising:
a sending module, configured to: send an enhanced physical downlink control channel ePDCCH to a terminal, wherein the ePDCCH channel carries scheduling information of a system information block SIB; and send a physical downlink shared channel PDSCH to the terminal based on the scheduling information of the SIB, wherein the PDSCH carries the SIB.

17. The communications apparatus according to claim 16, wherein a frequency domain resource occupied by the ePDCCH is a continuous frequency domain resource located at an edge of system bandwidth; and/or
a time-frequency resource occupied by the ePDCCH is N physical resource block PRB pairs occupied by the ePDCCH, and N is an integer greater than or equal to 1; and/or
a time-frequency resource occupied by the ePDCCH is the first to an N^{th} PRB pairs and/or an (M-N+1)^{th} to an M^{th} PRB pairs, and M is a total quantity of PRB pairs.

18. The communications apparatus according to claim 17, wherein the sending module is further configured to send resource indication information to the terminal, wherein the resource indication information is used to indicate the time-frequency resource occupied by the ePDCCH.

19. The communications apparatus according to claim 18, wherein the sending module is specifically configured to send a master information block MIB to the terminal, wherein the MIB comprises the resource indication information.

20. The communications apparatus according to claim 19, wherein the resource indication information occupies at least one idle bit in the MIB.

21. The communications apparatus according to any one of claims 16 to 20, wherein the sending module is further configured to send transmission type indication information to the terminal, wherein the transmission type indication information is used to indicate a transmission type of the ePDCCH, and the transmission type of the ePDCCH is localized transmission or distributed transmission.

22. The communications apparatus according to claim 21, wherein the transmission type indication information is comprised in the MIB, and the transmission type indication information occupies at least one idle bit in the MIB.

23. A communications apparatus, comprising:
a receiving module, configured to receive an enhanced physical downlink control channel ePDCCH and a physical downlink shared channel PDSCH that are sent by a network device, wherein the ePDCCH channel carries scheduling information of a system information block SIB, and the PDSCH carries the SIB; and
a processing module, configured to demodulate the PDSCH based on the scheduling information of the SIB, to obtain the SIB.

24. The communications apparatus according to claim 23, wherein a time-frequency resource occupied by the ePDCCH is a continuous frequency domain resource located at an edge of system bandwidth; and/or
a time-frequency resource occupied by the ePDCCH is N physical resource block PRB pairs occupied by the ePDCCH, and N is an integer greater than or equal to 1; and/or
a time-frequency resource occupied by the ePDCCH is the first to an N^{th} PRB pairs and/or an (M-N+1)^{th} to an M^{th} PRB pairs, and M is a total quantity of PRB pairs.

25. The communications apparatus according to claim 23 or 24, wherein the receiving module is further configured to receive resource indication information sent by the network device, wherein the resource indication information is used to indicate the time-frequency resource occupied by the ePDCCH; and
that a receiving module is configured to receive an ePDCCH sent by a network device comprises: the receiving module is configured to receive, based on the time-frequency resource occupied by the ePDCCH, the ePDCCH sent by the network device.

26. The communications apparatus according to claim 25, wherein that the receiving module is configured to receive resource indication information sent by the network device comprises: the receiving module is configured to receive a master information block MIB sent by the network device, wherein the MIB comprises the resource indication information.

27. The communications apparatus according to claim 26, wherein the resource indication information occupies at least one idle bit in the MIB.

28. The communications apparatus according to any one of claims 23 to 27, wherein the receiving module is further configured to receive transmission type indication information sent by the network device, wherein the transmission type indication information is used to indicate a transmission type of the ePDCCH, and the transmission type of the ePDCCH is localized transmission or distributed transmission; and
that a receiving module is configured to receive an ePDCCH sent by a network device comprises: the receiving module is configured to receive, based on the transmission type of the ePDCCH, the ePDCCH sent by the network device.

29. A computer-readable storage medium, wherein when an instruction in the storage medium is executed by a processor of a communications apparatus, the communications apparatus is enabled to implement the communication method according to any one of claims 1 to 15.
